# EUROPEAN PATENT APPLICATION

(11) **EP 3 091 652 A1**
(43) Date of publication of application: **09.11.2016**
(21) Application number: 14877297.3
(22) Date of filing: 09.12.2014
(51) Int. Cl.: H02M 3/335

(54) **BIDIRECTIONAL TRANSMISSION CONVERTOR SUITABLE FOR HIGH VOLTAGE AND HIGH POWER**

(30) Priority: 31.12.2013 CN 201310753263
(71) Applicant: State Grid Corporation of China (SGCC), Beijing 100031 (CN); State Grid Smart Grid Research Institute, Beijing 102211 (CN); China-Epri Electric Power Engineering Co. Ltd., Beijing 102200 (CN)
(72) Inventor: WEI, Xiaoguang, Beijing 102200 (CN); YU, Haiyu, Beijing 102200 (CN); LUO, Xiang, Beijing 102200 (CN); ZHA, Kunpeng, Beijing 102200 (CN); GAO, Chong, Beijing 102200 (CN)
(74) Representative: Vidon Brevets & Stratégie
(86) International application number: PCT/CN2014/093332
(87) International publication number: WO 2015/101142

(57) **Abstract**

A bidirectional transmission convertor suitable for a high voltage and a high power, comprising a power module. The power module comprises a high-frequency transformer and modules of a full-bridge topological structure which are respectively connected to each phase of the primary side and the secondary side of the high-frequency transformer, wherein the modules of the full-bridge topological structure which are respectively connected to each phase of the primary side and the secondary side respectively comprise four modules SMp1 and four modules SMs, each bridge arm of the modules of the full-bridge topological structure which are connected to each phase of the primary side is respectively provided with one module SMp, and each bridge arm of the modules of the full-bridge topological structure which are connected to each phase of the secondary side is respectively provided with one module SMs. The convertor reduces the switching frequency and the switching loss of a power tube, reduces the electrical stress borne by a single tube, and improves the waveform quality of an alternating current link.

## Description

### Field of the Invention

The present invention relates to a converter, and more specifically, relates to a converter suitable for high-voltage and high-power bidirectional transmission.

### Background of the Invention

DC/DC converters developed from direct current chopper circuits in the low voltage field are also referred to as direct current transformers. In recent years, along with the proposition of a direct current grid concept, its application studies in the fields of high voltage and large capacity draw universal attention of scholars at home and abroad. Thus, the problems of novel topological patterns, simulation modeling technology, high-frequency transformer key technology and the like increasingly become study hotspots, wherein the determination of the topological patterns is the foundation of studies.

The most original topologies of the DC/DC converters are non-isolated single-tube direct current chopper circuits, such as Buck circuits, Boost circuits, Buck-Boost circuits, Cuk circuits, Zeta circuits, SEPIC circuits and the like, and the power devices of the circuits are in a hard switching state in work, so that the switching loss is high, and the working frequency and efficiency are difficult to further improve. Under the background of direct current grids, the DC/DC converters need to be applied to the occasions of wind power plant grid connection, interconnection of direct current grids of different voltage levels and the like with high voltage level and large transmission capacity, and these simple topological patterns are difficult to meet the application requirements, so it is very important to study DC-DC converter topologies suitable for high-voltage and high-power transmission.

### Summary of the Invention

The aim of the present invention is to provide a converter suitable for high-voltage and high-power bidirectional transmission, which reduces the switching frequency and the switching loss of power tubes, reduces the electrical stress borne by single tubes and improves the waveform quality of an alternating current link.

To fulfill the above aim, the present invention adopts the following technical solution: a converter suitable for high-voltage and high-power bidirectional transmission includes a power module; the power module includes a high-frequency transformer and modules of full-bridge topological structures respectively connected with the phases of the primary side and the secondary side of the high-frequency transformer; the modules of full-bridge topological structures connected with the phases of the primary side and the secondary side respectively include four modules SMp and four modules SMs, each bridge arm of the modules of full-bridge topological structures connected with the phases of the primary side is respectively provided with one module SMp, and each bridge arm of the modules of full-bridge topological structures connected with the phases of the secondary side is respectively provided with one module SMs.

In the converter suitable for high-voltage and high-power bidirectional transmission provided by the present invention, each of the modules SMp or the modules SMs includes a random number of series-connected sub-modules SMi; each sub-module SMi is a half-bridge sub-module, including a half-bridge module and a capacitor connected with the half-bridge module; and two bridge arms of the half-bridge module respectively include an IGBT and a diode which are in inverse parallel connection.

In the converter suitable for high-voltage and high-power bidirectional transmission provided by the present invention, each sub-module SMi is a full-bridge sub-module, including a full-bridge module and a capacitor serving as a load of the full-bridge module; and four bridge arms of the full-bridge module respectively include an IGBT and a diode which are in inverse parallel connection.

In another preferred converter suitable for high-voltage and high-power bidirectional transmission provided by the present invention, each sub-module SMi is a clamp double sub-module, including two half-bridge sub-modules as well as two diodes and a switching tube arranged between the two half-bridge sub-modules; the switching tube includes an IGBT and a diode which are in inverse parallel connection; the switching tube is connected in parallel between the two half-bridge sub-modules; a diode is respectively arranged between the first half-bridge sub-module and a switching tube branch and between the second half-bridge sub-module and the switching tube branch; the anode of the first diode is connected with the cathode of the diode arranged in the switching tube, and the cathode of the second diode is connected with the anode of the diode arranged in the switching tube.

In yet another preferred converter suitable for high-voltage and high-power bidirectional transmission provided by the present invention, the converter has an input-series and output-parallel form, an input-series and output-series form, an input-parallel and output-series form and an input-parallel and output-parallel form. In still yet another preferred converter suitable for high-voltage and high-power bidirectional transmission provided by the present invention, the input-series and output-parallel form indicates that at least one side of the input ends and the output ends is configured in a way that the input ends of at least two power modules are connected in series or the output ends of at least two power modules are connected in parallel; the input-series and output-series form indicates that at least one side of the input ends and the output ends is configured in a way that the input ends of at least two power modules are connected in series or the output ends of at least two power modules are connected in series; the input-parallel and output-series form indicates that at least one side of the input ends and the output ends is configured in a way that the input ends of at least two power modules are connected in parallel or the output ends of at least two power modules are connected in series; and the input-parallel and output-parallel form indicates that at least one side of the input ends and the output ends is configured in a way that the input ends of at least two power modules are connected in parallel or the output ends of at least two power modules are connected in parallel.

In still yet another preferred converter suitable for high-voltage and high-power bidirectional transmission provided by the present invention, each of the modules SMp and the modules SMs is respectively connected in series with an inductor.

In still yet another preferred converter suitable for high-voltage and high-power bidirectional transmission provided by the present invention, the four modules SMp are respectively SMp1, SMp2, SMp3 and SMp4, the SMp1 is connected in series with the SMp2, and the SMp3 is connected in series with the SMp4; the input end and the output end of each phase of the primary side of the high-frequency transformer are respectively connected between the SMp1 and the SMp2 and between the SMp3 and the SMp4.

In still yet another preferred converter suitable for high-voltage and high-power bidirectional transmission provided by the present invention, the SMp1, SMp2, SMp3 and SMp4 have the same number of sub-modules, set as n; the sum of the sub-modules of the SMp1 and the SMp2 in operation must be n, and the sum of the sub-modules of the SMp3 and the SMp4 in operation must be n.

In still yet another preferred converter suitable for high-voltage and high-power bidirectional transmission provided by the present invention, the full-bridge topological structure sub-modules connected with the phases of the secondary side of the high-frequency transformer are the same as those on the primary side of the high-frequency transformer in structure, and the numbers of the sub-modules on the primary side and the secondary side are the same or different and are determined according to respective voltage levels.

Compared with the closest prior art, the technical solution provided by the present invention has the following advantages:
1, the topological structures of the power modules in the present invention have the characteristics of electrical isolation and power bidirectional transmission, and are applicable to direct current conversion occasions of high-voltage and high-power bidirectional energy transfer;
2, the stress borne by high-power electric/electronic devices is reduced by adopting the technical solution of the present invention;
3, the reasonable series and parallel combination of different number of power modules in the present invention can be applied to the occasions of high-voltage, high-power and bidirectional energy transfer;
4, the modularized structure of the main circuit in the present invention is easy to produce, assemble and expand; and
5, the technical solution of the present invention reduces the switching frequency and the switching loss of a power tube, reduces the electrical stress borne by a single tube and improves the waveform quality of an alternating current link.

### Brief Description of the Drawings

Fig. 1 is a structural schematic diagram of multiple power modules of a single-phase transformer in the present invention;
Fig. 2 is a structural schematic diagram of multiple power modules of a three-phase transformer in the present invention;
Fig. 3 is a structural schematic diagram of modules SMp and modules SMs in the present invention;
Fig. 4 is a structural schematic diagram of a half-bridge sub-module SMi in the present invention;
Fig. 5 is a structural schematic diagram of a full-bridge sub-module SMi in the present invention;
Fig. 6 is a structural schematic diagram of a clamp double sub-module SMi in the present invention;
Fig. 7 is a schematic diagram of an input-series and output-series form of power modules in the present invention;
Fig. 8 is a schematic diagram of an input-series and output-parallel form of power modules in the present invention;
Fig. 9 is a schematic diagram of an input-parallel and output-parallel form of power modules in the present invention;
Fig. 10 is a schematic diagram of an input-parallel and output-series form of power modules in the present invention;
Fig. 11 is a structural schematic diagram of a single-power module of the single-phase transformer in the present invention;
Fig. 12 is a structural schematic diagram of a single-power module of the three-phase transformer in the present invention.

### Detailed Description of the Embodiments

The present invention will be further described in detail below in combination with embodiments.

### Embodiment 1:

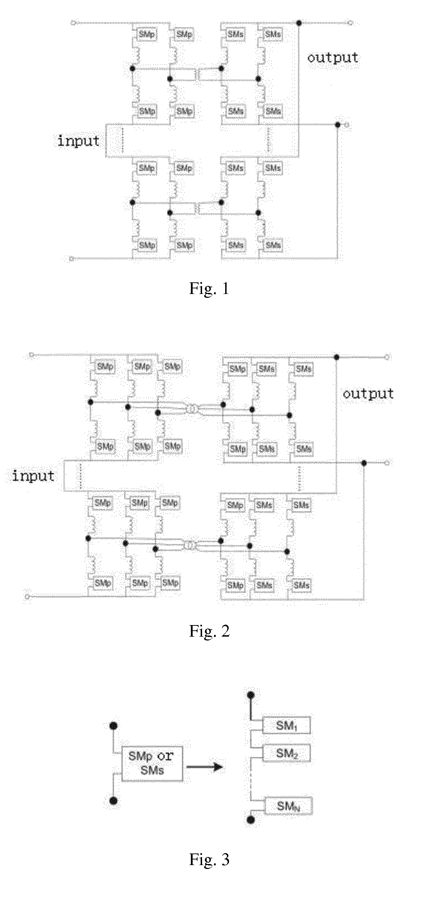

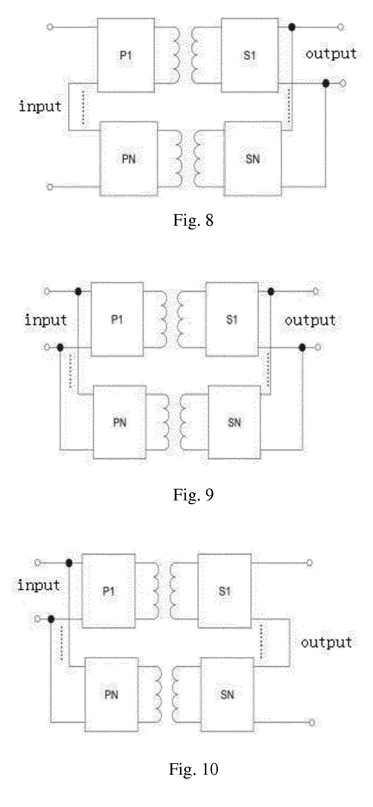

As shown in Figs. 1-12, a converter suitable for high-voltage and high-power bidirectional transmission in this embodiment of the present invention includes a power module; the power module includes a high-frequency transformer and modules of full-bridge topological structures respectively connected with the phases of the primary side and the secondary side of the high-frequency transformer; the modules of full-bridge topological structures connected with the phases of the primary side and the secondary side respectively include four modules SMp and four modules SMs, each bridge arm of the modules of full-bridge topological structures connected with the phases of the primary side is respectively provided with one module SMp, and each bridge arm of the modules of full-bridge topological structures connected with the phases of the secondary side is respectively provided with one module SMs.

Each of the modules SMp or the modules SMs includes a random number of series-connected sub-modules SMi, wherein the number of the included series-connected sub-modules is determined according to the input and output voltage levels; each sub-module SMi is a half-bridge sub-module, including a half-bridge module and a capacitor connected with the half-bridge module; and two bridge arms of the half-bridge module respectively include an IGBT and a diode which are in inverse parallel connection.

Each sub-module SMi is a full-bridge sub-module, including a full-bridge module and a capacitor serving as a load of the full-bridge module; and four bridge arms of the full-bridge module respectively include an IGBT and a diode which are in inverse parallel connection.

Each sub-module SMi is a clamp double sub-module, including two half-bridge sub-modules as well as two diodes and a switching tube arranged between the two half-bridge sub-modules; the switching tube includes an IGBT and a diode which are in inverse parallel connection; the switching tube is connected in parallel between the two half-bridge sub-modules; a diode is respectively arranged between the first half-bridge sub-module and a switching tube branch and between the second half-bridge sub-module and the switching tube branch; the anode of the first diode is connected with the cathode of the diode arranged in the switching tube, and the cathode of the second diode is connected with the anode of the diode arranged in the switching tube. The structures of the above sub-modules need to be specifically selected according to the voltage level and the power level.

The converter has an input-series and output-parallel form, an input-series and output-series form, an input-parallel and output-series form and an input-parallel and output-parallel form, and the four combined forms are comprehensively selected according to the voltage level and the power value of the converter.

The input-series and output-parallel form indicates that at least one side of the input ends and the output ends is configured in a way that the input ends of at least two power modules are connected in series or the output ends of at least two power modules are connected in parallel; the input-series and output-series form indicates that at least one side of the input ends and the output ends is configured in a way that the input ends of at least two power modules are connected in series or the output ends of at least two power modules are connected in series; the input-parallel and output-series form indicates that at least one side of the input ends and the output ends is configured in a way that the input ends of at least two power modules are connected in parallel or the output ends of at least two power modules are connected in series; and the input-parallel and output-parallel form indicates that at least one side of the input ends and the output ends is configured in a way that the input ends of at least two power modules are connected in parallel or the output ends of at least two power modules are connected in parallel. The number of the power modules on the input side may also be one, and the number of the power modules on the output side may also be one. The number of the power modules is not limited to be at least two. In addition, the numbers of the power modules on the input side and the output side may be different.

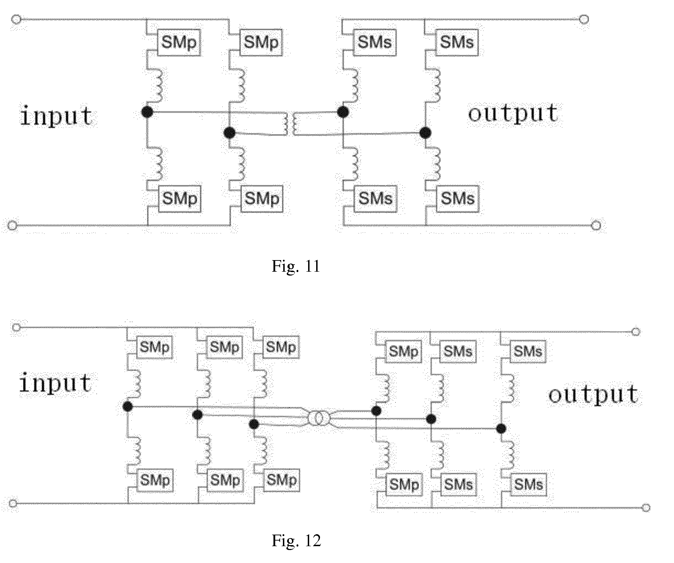

For example, one power module is on the input side, one power module is on the output side, and this is the most extreme case, as shown in Fig. 11 and Fig. 12; one power module is on the input side, at least two power modules connected in series or in parallel are on the output side, and this is the extreme case of the input side; at least two power modules connected in series or in parallel are on the input side, one power module is on the output side, and this is the extreme case of the output side; at least two power modules connected in series or in parallel are on the input side, at least two power modules connected in series or in parallel are also on the output side, and the numbers of the power modules on the two sides may be equal or unequal. Each of the modules SMp and the modules SMs is respectively connected in series with an inductor.

The four modules SMp are respectively SMp1, SMp2, SMp3 and SMp4, the SMp1 is connected in series with the SMp2, and the SMp3 is connected in series with the SMp4; the input end and the output end of each phase of the primary side of the high-frequency transformer are respectively connected between the SMp1 and the SMp2 and between the SMp3 and the SMp4.

The SMp1, SMp2, SMp3 and SMp4 have the same number of sub-modules, set as n; the sum of the sub-modules of the SMp1 and the SMp2 in operation must be n, and the sum of the sub-modules of the SMp3 and the SMp4 in operation must be n.

The full-bridge topological structure sub-modules connected with the phases of the secondary side of the high-frequency transformer are the same as those on the primary side of the high-frequency transformer in structure, and the numbers of the sub-modules on the primary side and the secondary side are the same or different and are determined according to respective voltage levels. For example, the SMi included in the modules SMp are half-bridge sub-modules, while the SMi in the modules SMs are full-bridge sub-modules or clamp double sub-modules or half-bridge sub-modules, that is, the SMi included in the modules SMp and SMs may be any of half-bridge sub-modules, full-bridge sub-modules and clamp double sub-modules.

The input side of the converter provides direct current voltage, and the output side thereof provides direct current voltage, so the converter can realize the functions of conversion of direct current voltage and bidirectional transmission of direct current power. The converter includes three parts: a current converter on the input side, a high-frequency transformer and a current converter on the output side. The internal structure of the converter is in an input-series and output-parallel, input-series and output-series, input-parallel and output-series or input-parallel and output-parallel combined form selected according to the input voltage level and power level, thus meeting the requirements of functions.

The working principle of the converter will be described, taking Fig. 1 as an example. Direct current voltage is input from the input side and inverted into high-frequency voltage via the current converter on the input side, the high-frequency voltage is output to the primary side of the high-frequency transformer and coupled into alternating current voltage, the alternating current voltage is transferred to the secondary side and then transferred to the output side, and the high-frequency alternating current voltage is rectified into direct current voltage via the current converter on the output side, so that conversion of the direct current voltage and transmission of direct current power are realized. Both the current converter on the input side and the current converter on the output side can work in two states of rectification and inversion, and adjust the two parameters of amplitude and phase of the output voltage, thus ensuring the bidirectional transmission function of the converter. That is, during forward transmission, the current converter on the input side works in the inversion state, and the current converter on the output side works in the rectification state; and during inverse transmission, the current converter on the original input side works in the rectification state, and the current converter on the original output side works in the inversion state.

The sub-modules of the current converter can control the output voltage by switching internal sub-module switching devices. In order to ensure the stability of the overall direct current voltage, the number of sub-modules of each phase unit of the current converter in the corresponding state must be kept constant and same (set as n), and the desired alternating current voltage for outputting is obtained by changing the allocation relation of the n sub-modules on the upper and lower bridge arms of the phase. For example, the n sub-modules are averagely distributed between the upper and lower bridge arms, and the voltage output from the alternating current end of the phase is zero. If the sub-modules of the lower bridge arm in the corresponding state are more than those of the upper bridge arm, the voltage output from the alternating current end of the phase is positive; otherwise, the voltage output from the alternating current end of the phase is negative. The structural form of different sub-modules is selected according to different voltage levels, power levels, system requirements for the converter in different application occasions and the like.

The current converters on the input and output sides, which are selected with the same structure, can ensure that the alternating current voltage in the converter is in a stepped sinusoidal form, wherein the voltage is very beneficial to the operation of the high-frequency transformer, so that the loss can be reduced and the overall working efficiency of the converter can be improved; the sub-modules are simple in structure, has a few working states and is reliably simple in control; the sub-modules are the same in structure and parameter, which reduces the manufacturing difficulty and cost and facilitates production, assembly and expansion; and only the number of the sub-modules needs to be increased for higher voltage and higher power transmission. Although the traditional two-level voltage source current converter can work in the rectification and inversion state, the voltage on the alternating current side in a two-level form is adverse to the operation of the high-frequency transformer and high in loss, and the overall efficiency of the converter is limited. Moreover, in the two-level structural form, 1) too many switching devices series-connected with a single valve bank increase the difficulty in static and dynamic voltage sharing of the series-connected devices; 2) the current converter generates high impact voltage du/dt in work, so that all devices need to be designed in view of impact tolerance; and 3) in order to obtain good dynamic performance and harmonic characteristic, the switching frequency of the switching devices is generally about 1-2KHz, so that the loss of the current converter is increased and the overall efficiency of the converter is reduced. The working principles of different sub-module structures will be specifically described below.

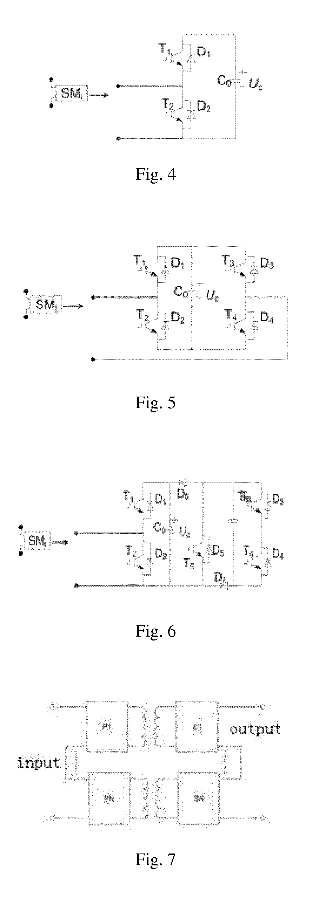

Fig. 4 shows the working principle of a half-bridge sub-module: the sub-module is converted between two working states under control in normal operation. 1) In an output state, T1 is turned on, T2 is turned off, then the sub-module is in the output state, namely the output voltage of the sub-module is equal to the voltage of the capacitor, and the current in the bridge arm charges/ discharges the capacitor of the sub-module; and 2) in a non-output state, T1 is turned off, T2 is turned on, then the sub-module is in the non-output state, namely the output voltage of the sub-module is zero, and the capacitor of the sub-module is bypassed. The half-bridge sub-module can output levels o and Uc.

When the converter composed of the half-bridge sub-modules in Fig. 4 is a single-phase converter in Fig. 1 or a three-phase converter in Fig. 2 and the numbers of the sub-modules connected in series to the upper and lower bridge arms of each phase are respectively n, the alternating current side can output (n+1) levels; and at any moment of normal operation, no matter how many sub-modules in the upper and lower bridge arms of each phase are in the output state, the sum of the numbers of the sub-modules in the upper and lower bridge arms of each phase in the output state must be n. The transformer is a single-phase transformer in Fig. 1 and a three-phase transformer in Fig. 2, the switching devices in Fig. 2 are more than those in Fig. 1 in number and control quantity and are more complex than those in Fig. 1, but the three-phase transformer is higher than the single-transformer in efficiency and core utilization rate, so the transformer needs be selected by comprehensive comparison according to the voltage level and the power level.

Fig. 5 shows the working principle of a full-bridge sub-module. It can be regarded as a combination of two half-bridge sub-modules in Fig. 4. The full-bridge sub-module is composed of four IGBTs (T1, T2, T3, T4) and four inversely parallel-connected diodes (D1, D2, D3, D4), Co is a direct current capacitor, and Uc is capacitor voltage. Based on the principle analysis of Fig. 4, it can be known that when T1 and T4 are turned on, the full-bridge sub-module outputs the voltage Uc; when T2 and T3 are turned on, the output voltage is Uc; and when T1 and T3 or T2 and T4 are turned on, the output voltage is 0. When the converter composed of the half-bridge sub-modules in Fig. 5 is a single-phase converter in Fig. 1 or a three-phase converter in Fig. 2 and the numbers of the sub-modules connected in series to the upper and lower bridge arms of each phase are respectively n, the alternating current side can output (2n+1) levels; and at any moment of normal operation, no matter how many sub-modules in the upper and lower bridge arms of each phase are in the output state, the sum of the numbers of the sub-modules in the upper and lower bridge arms of each phase in the output state must be n.

Fig. 6 shows the working principle of a clamp double sub-module. It is developed on the basis of the half-bridge sub-module, namely based on the combination of two half-bridge sub-modules, a switching device T5 and three inversely parallel-connected diodes D5, D6 and D7 are added between the two half-bridge sub-modules. In normal operation, T5 is always turned on, the clamp double sub-module is equivalent to two cascaded half-bridge sub-modules, and the output level has three states: 0, Uc and 2Uc. Thus, the current converter of clamp double sub-modules can completely adopt the control strategy and the modulation method of the current converter of half-bridge sub-modules, and only pulse needs to be reallocated on the trigger level of the device. When the converter composed of the half-bridge sub-modules in Fig. 6 is a single-phase converter in Fig. 1 or a three-phase converter in Fig. 2 and the numbers of the sub-modules connected in series to the upper and lower bridge arms of each phase are respectively n, the alternating current side can output (2n+2) levels; and at any moment of normal operation, no matter how many sub-modules in the upper and lower bridge arms of each phase are in the output state, the sum of the numbers of the sub-modules in the upper and lower bridge arms of each phase in the output state must be n. Although the switching devices and the diodes of the single clamp double sub-module are more than those of the full-bridge sub-module, the total number of the switching devices and the diodes of the clamp double sub-modules is smaller than that of the full-bridge sub-modules under the current converter with the same capacity, so the clamp double sub-modules are superior to the full-bridge sub-modules in performance, close to the half-bridge sub-modules in number and inferior to the full-bridge sub-modules in level number.

Finally, it should be noted that the above embodiments are merely used for illustrating the technical solutions of the present invention, rather than limiting the present invention; though the present invention is illustrated in detail with reference to the aforementioned embodiments, it should be understood by those of ordinary skill in the art that modifications or equivalent substitutions still can be made to the specific implementations of the present invention; and these modifications or equivalent substitutions without departing from the spirit and scope of the present invention shall fall into the scope of the claims.

## Claims

1. A converter suitable for high-voltage and high-power bidirectional transmission comprises a power module; the power module comprises a high-frequency transformer and modules of full-bridge topological structures respectively connected with the phases of the primary side and the secondary side of the high-frequency transformer; the modules of full-bridge topological structures connected with the phases of the primary side and the secondary side respectively comprise four modules SMp and four modules SMs, each bridge arm of the modules of full-bridge topological structures connected with the phases of the primary side is respectively provided with one module SMp, and each bridge arm of the modules of full-bridge topological structures connected with the phases of the secondary side is respectively provided with one module SMs.

2. The converter suitable for high-voltage and high-power bidirectional transmission according to claim 1, wherein each of the modules SMp or the modules SMs comprises a random number of series-connected sub-modules SMi; each sub-module SMi is a half-bridge sub-module, comprising a half-bridge module and a capacitor connected with the half-bridge module; and two bridge arms of the half-bridge module respectively comprise an IGBT and an inversely parallel-connected diode.

3. The converter suitable for high-voltage and high-power bidirectional transmission according to claim 2, wherein each sub-module SMi is a full-bridge sub-module, comprising a full-bridge module and a capacitor serving as a load of the full-bridge module; and four bridge arms of the full-bridge module respectively comprise an IGBT and an inversely parallel-connected diode.

4. The converter suitable for high-voltage and high-power bidirectional transmission according to claim 2, wherein each sub-module SMi is a clamp double sub-module, comprising two half-bridge sub-modules as well as two diodes and a switching tube arranged between the two half-bridge sub-modules; the switching tube comprises an IGBT and an inversely parallel-connected diode; the switching tube is connected in parallel between the two half-bridge sub-modules; a diode is respectively arranged between the first half-bridge sub-module and a switching tube branch and between the second half-bridge sub-module and the switching tube branch; the anode of the first diode is connected with the cathode of the diode arranged in the switching tube, and the cathode of the second diode is connected with the anode of the diode arranged in the switching tube.

5. The converter suitable for high-voltage and high-power bidirectional transmission according to claim 1, wherein the converter has an input-series and output-parallel form, an input-series and output-series form, an input-parallel and output-series form and an input-parallel and output-parallel form.

6. The converter suitable for high-voltage and high-power bidirectional transmission according to claim 5, wherein the input-series and output-parallel form indicates that at least one side of the input ends and the output ends is configured in a way that the input ends of at least two power modules are connected in series or the output ends of at least two power modules are connected in parallel; the input-series and output-series form indicates that at least one side of the input ends and the output ends is configured in a way that the input ends of at least two power modules are connected in series or the output ends of at least two power modules are connected in series; the input-parallel and output-series form indicates that at least one side of the input ends and the output ends is configured in a way that the input ends of at least two power modules are connected in parallel or the output ends of at least two power modules are connected in series; and the input-parallel and output-parallel form indicates that at least one side of the input ends and the output ends is configured in a way that the input ends of at least two power modules are connected in parallel or the output ends of at least two power modules are connected in parallel.

7. The converter suitable for high-voltage and high-power bidirectional transmission according to claim 2, wherein each of the modules SMp and the modules SMs is respectively connected in series with an inductor.

8. The converter suitable for high-voltage and high-power bidirectional transmission according to claim 1, wherein the four modules SMp are respectively SMp1, SMp2, SMp3 and SMp4, the SMp1 is connected in series with the SMp2, and the SMp3 is connected in series with the SMp4; the input end and the output end of each phase of the primary side of the high-frequency transformer are respectively connected between the SMp1 and the SMp2 and between the SMp3 and the SMp4.

9. The converter suitable for high-voltage and high-power bidirectional transmission according to claim 8, wherein the SMp1, SMp2, SMp3 and SMp4 have the same number of sub-modules, set as n; the sum of the sub-modules of the SMp1 and the SMp2 in operation must be n, and the sum of the sub-modules of the SMp3 and the SMp4 in operation must be n.

10. The converter suitable for high-voltage and high-power bidirectional transmission according to claim 1, wherein the full-bridge topological structure sub-modules connected with the phases of the secondary side of the high-frequency transformer are the same as those on the primary side of the high-frequency transformer in structure, and the numbers of the sub-modules on the primary side and the secondary side are the same or different and are determined according to respective voltage levels.
